# FASCICULE DE BREVET EUROPEEN

(11) **EP 2 903 864 B1**
(45) Date de publication et mention de la délivrance du brevet: **21.09.2016**
(21) Numéro de dépôt: 13773221.0
(22) Date de dépôt: 01.10.2013
(51) Int. Cl.: B60R 16/03, H02J 7/14

(54) **PROCÉDÉ DE GESTION DE L'ÉNERGIE ÉLECTRIQUE EMBARQUÉE DANS UN VÉHICULE MILITAIRE ET VÉHICULE MILITAIRE ADAPTÉ À LA MISE EN OEUVRE DU PROCÉDÉ**
VERFAHREN ZUR VERWALTUNG DER STROMVERSORGUNG AN BORD EINES MILITÄRFAHRZEUGES UND MILITÄRFAHRZEUG ZUR UMSETZUNG DES VERFAHRENS
METHOD FOR MANAGING THE ELECTRIC POWER ON-BOARD A MILITARY VEHICLE, AND MILITARY VEHICLE SUITABLE FOR IMPLEMENTING SAID METHOD

(30) Priorité: 01.10.2012 FR 1202597
(43) Date de publication de la demande: 12.08.2015
(73) Titulaire: THALES, 92200 Neuilly-sur-Seine (FR)
(72) Inventeur: POULAIN, Jean-Louis, F-49309 Cholet (FR)
(74) Mandataire: Lavoix
(86) Numéro de dépôt international: PCT/EP2013/070477
(87) Numéro de publication internationale: WO 2014/053507

(56) Documents cités:
- DE-A1-102008 024 415
- DE-A1-102008 039 284
- DE-A1-102009 029 335
- US-A1- 2010 030 431

## Description

La présente invention concerne un procédé de gestion de l'énergie embarquée dans un véhicule militaire. La présente invention concerne également un véhicule militaire adapté à la mise en oeuvre du procédé de gestion. Le document DE 10 2008 024 415 divulgue un procédé de gestion d'énergie dans un véhicule civil.

L'intégration croissante de système de type « C4ISR » sur un véhicule militaire pose des problèmes de dimensionnement des générateurs du véhicule militaire. Les systèmes de type « C4ISR » sont utilisés pour permettre la coordination des opérations. L'acronyme « C4ISR » correspond à C4 pour « Computerised Command, Control, Communication », I pour « Intelligence », S pour « Surveillance », et R pour « Reconnaissance ».

L'accumulation de tels systèmes couplés souvent à une climatisation impose un besoin en énergie électrique important pour le véhicule militaire considéré. Ceci requiert des architectures électriques puissantes et complexes pour assurer le bon fonctionnement du véhicule dans des conditions climatiques sévères et sur des théâtres d'opérations hostiles.

Un véhicule militaire comporte généralement un moteur thermique (auxiliaire ou non) et un alternateur relié à ce moteur. Cet ensemble forme un groupe électrogène. Le véhicule militaire comporte également un élément de stockage d'énergie électrique pouvant être alimenté par le groupe électrogène. En général, le véhicule comporte des batteries dédiées au véhicule dont le rôle est d'assurer le démarrage du moteur thermique. Le véhicule militaire comporte aussi des batteries dites « système » destinées à favoriser le lancement, le fonctionnement, ou l'arrêt de la station utilisatrice des systèmes C4ISR et de la climatisation.

Les batteries véhicule sont usuellement des batteries au plomb tandis que les batteries systèmes sont des batteries au plomb gel. Dans les deux cas, aucune de ses batteries ne supporte bien un fonctionnement en cycles de charge et de décharge profonde du fait de leur nature chimique.

En outre, le véhicule moteur comporte une pluralité d'organes susceptibles d'être alimentés soit par l'alternateur soit par l'élément de stockage ainsi qu'expliqué plus haut.

Il est souhaitable d'adapter la production d'énergie au besoin réel des différents organes embarqués sur le véhicule militaire.

La solution adoptée généralement est de surdimensionner les générateurs électriques du véhicule militaire en prenant comme point de référence la pire sollicitation du système. Ainsi, cela signifie que le groupe électrogène et les batteries sont dimensionnés pour le cas où tous les organes consomment à plein en même temps.

Cet effet est encore accru par le décalage temporel entre la sortie d'usine du système mis dans le véhicule et le moment où le cahier de spécifications avec les besoins en alimentation électrique des organes est établi. En effet, il arrive fréquemment que les organes effectivement produits ont un besoin en alimentation électrique inférieur à ce qui était initialement prévu.

Une telle solution présente de nombreux défauts. D'abord, les coûts d'acquisition et d'intégration du système d'énergie sont très importants. En effet, le moteur thermique est surdimensionné par rapport à l'utilisation qui en est faite.

A ce surcoût s'ajoute le fait que la maintenance est chère ainsi que la consommation qui sera élevée du fait qu'il y aura une perte d'énergie importante. En effet, le moteur thermique tourne en permanence et on module l'énergie extraite en utilisant un ballast, traditionnellement sous la forme d'une résistance de charge qui est mise ou non.

En outre, dans cette configuration, il existe un fort risque d'encalminage du moteur. En effet, faire tourner un moteur pour alimenter uniquement une charge de système faible et la recharge d'une batterie à C/10 conduit inévitablement à encalminer le moteur thermique. De fait, soit celui-ci tourne trop lentement, soit le couple est trop faible. Lorsque le moteur tourne trop lentement, la production d'énergie est insuffisante et la charge électrique n'est pas assurée. Lorsque le couple est trop faible, cela signifie qu'une partie seulement de la capacité du moteur (environ 30%) est utilisée, ce qui se fait au détriment de la consommation.

En outre, le travail en mode silencieux est très difficile pour un tel véhicule. Pour des véhicules militaires, le mode silencieux ou « silent watch » est important puisque le véhicule doit pouvoir se positionner sur le terrain, sans se faire repérer et ce pendant plusieurs heures. Or, travailler en mode de cyclage sur les batteries plomb est délicat dans la mesure où d'une part l'autonomie procurée par ces batteries reste modeste, et d'autre part ce mode de fonctionnement réduit très fortement leurs durées de vie. De ce fait, l'autonomie des véhicules est insuffisante pour certaines missions sur le terrain.

Il existe donc un besoin pour un procédé de gestion de l'énergie embarquée dans un véhicule militaire permettant de remédier aux défauts susmentionnés de l'état de la technique, et notamment de réduire la consommation du moteur thermique.

Selon l'invention, ce but est atteint par un procédé de gestion de l'énergie électrique embarquée dans un véhicule militaire, le véhicule militaire comportant un moteur thermique, un alternateur relié au moteur, un élément de stockage d'énergie électrique susceptible d'être alimenté électriquement par l'alternateur et au moins un organe susceptible d'être alimenté électriquement par l'alternateur et l'élément de stockage. L'élément de stockage d'énergie électrique est une pluralité d'accumulateurs lithium. Le procédé comprend les étapes de détermination du besoin en alimentation électrique du véhicule en fonction du ou des organes en fonctionnement, de mesure de l'état de charge de l'élément de stockage et d'arrêt du fonctionnement du moteur thermique lorsque l'état de charge mesuré est suffisant pour que le ou chaque organe soit alimenté uniquement par l'élément de stockage pendant une durée supérieure à une durée prédéterminée.

Suivant des modes de réalisation particuliers, le procédé comprend une ou plusieurs des caractéristiques suivantes, prise(s) isolément ou suivant toutes les combinaisons techniquement possibles :
- le procédé comporte, en outre, une étape d'acquisition d'un profil de mission,
- l'étape de détermination du besoin en alimentation électrique du véhicule est également fonction du profil de mission.
- le procédé comprend une étape d'arrêt du fonctionnement d'au moins un organe en fonction du profil de mission acquis et de l'état de charge mesuré.
- l'élément de stockage d'énergie électrique est muni d'un moniteur adapté à mesurer l'énergie entrant et sortant de l'élément de stockage d'énergie électrique et dans lequel l'étape de mesure est effectuée par le moniteur.
- le moniteur est adapté à mesurer le nombre de cycles réalisés par l'élément de stockage,
- l'arrêt du fonctionnement du moteur thermique prend en compte le nombre de cycles réalisés par l'élément de stockage.
- le procédé comporte une étape de recharge de l'élément de stockage d'énergie électrique par l'alternateur lorsque le besoin en alimentation électrique déterminé est inférieur au total des besoins en alimentation électrique du véhicule avec l'ensemble des organes en fonctionnement diminué d'un seuil prédéterminé.
- à l'étape de recharge, le courant appliqué à l'élément de stockage d'énergie électrique varie temporellement en fonction d'au moins une caractéristique de l'élément de stockage d'énergie électrique.
- la caractéristique de stockage est la température maximale tolérée par l'élément de stockage d'énergie électrique.
- le courant est appliqué à l'élément de stockage d'énergie électrique pendant une première période de temps et une deuxième période de temps successive à la première période de temps, l'intensité du courant appliqué pendant la première période de temps étant supérieur à l'intensité du courant appliqué pendant la deuxième période de temps.
- le véhicule comporte, en outre, une interface homme/machine permettant à l'opérateur d'introduire des données, les données comprenant des instructions de gestion en mode manuel ou automatique.
- le procédé comprend une étape d'acquisition des instructions de gestion introduite par l'opérateur.
- l'interface homme/machine permet d'afficher des données, des données comprenant le nombre de cycles réalisés par l'élément de stockage.
- le procédé comporte une étape d'affichage de données sur l'interface homme/machine.
- l'élément de stockage est un ensemble de batteries lithium/ion.

L'invention concerne aussi un véhicule militaire comportant un moteur thermique, un alternateur relié au moteur, un élément de stockage d'énergie électrique susceptible d'être alimenté électriquement par l'alternateur, au moins un organe susceptible d'être alimenté électriquement par l'alternateur, l'élément de stockage et un contrôleur adapté à mettre en oeuvre le procédé de gestion tel que précédemment décrit.

D'autres caractéristiques et avantages de l'invention apparaîtront à la lecture de la description détaillée qui suit de modes de réalisation de l'invention, donnée à titre d'exemple uniquement et faite en référence aux dessins qui sont :
- la figure 1, une vue schématique d'un véhicule militaire ;
- la figure 2, un ordinogramme d'un exemple de procédé selon l'invention.

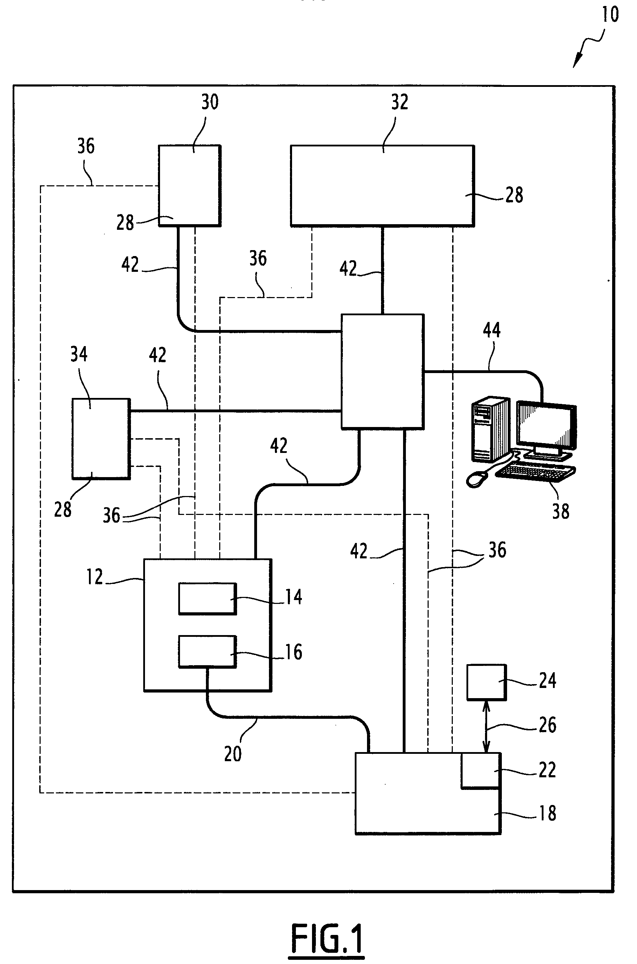

Le véhicule 10 de la figure 1 est un véhicule militaire. Le véhicule 10 est un véhicule terrestre. De manière connue en soi, les véhicules terrestres servent aussi bien d'unité de combat, d'outil de liaison, de transmission, ou encore de transport de troupe.

Ainsi, à titre d'exemple, le véhicule 10 est un véhicule de l'avant blindé (aussi désigné sous l'acronyme VAB). Un tel véhicule 10 a été créé pour transporter les combattants sur le champ de bataille en les protégeant de la mitraille, des éclats et des risques nucléaires, bactériologiques et chimiques (aussi désigné sous l'acronyme NBC). Ce véhicule existe sous de nombreuses versions et est facilement aérotransportable.

Un tel véhicule 10 avant blindé est propre à accueillir une dizaine de personnes dans certaines versions.

Ce véhicule 10 est couramment armé d'une mitrailleuse de calibre 12,7 mm pour les véhicules d'infanterie, soit de calibre 7,62 mm en circulaire sur le toit pour les autres modèles. En variante, il est équipé d'un tourelleau avec canon-mitrailleur de 20 mm ou d'un système lance-missile. Ces armes ne supportent pas de forte variation de température.

Selon un autre mode de réalisation, le véhicule 10 est un véhicule prépositionné à l'avant dont le rôle est d'être à proximité des combats.

En outre, de tels véhicules 10 sont équipés d'armes supportant une large gamme de températures.

Le véhicule 10 comporte un groupe 12 électrogène. Un groupe 12 électrogène est un dispositif autonome capable de produire de l'électricité. Le groupe 12 comprend un moteur 14 thermique qui actionne un alternateur 16.

Un moteur 14 fonctionne avec du carburant pour produire de l'énergie mécanique tandis qu'un alternateur 16 convertit de l'énergie mécanique en énergie électrique.

Dans le cadre des applications visées, le groupe électrogène est adapté à fournir de l'ordre de 8 à 12 kVA.

Le véhicule 10 comprend également un élément de stockage 18 d'énergie électrique susceptible d'être alimenté électriquement par l'alternateur 16. Ce lien est montré schématiquement sur la figure 1 par le fil 20 reliant l'alternateur 16 à l'élément de stockage 18.

L'élément de stockage 18 est un ensemble d'accumulateurs lithium. Un accumulateur lithium est un accumulateur électrochimique dont la réaction est fondée sur le lithium. Un tel accumulateur est celui qui offre la plus forte énergie spécifique (énergie par rapport à la masse) et la plus grande densité d'énergie des accumulateurs électrochimiques actuellement connus.

De préférence, l'élément de stockage 18 comporte un ensemble de batteries lithium-ion. Une batterie lithium-ion ou accumulateur lithium-ion est un type particulier d'accumulateur lithium.

Une batterie lithium-ion fonctionne sur le principe de l'échange réversible entre l'ion et le lithium entre une électrode positive et une électrode négative. Ces principaux avantages sont une énergie massique élevée (2 à 5 fois plus que le Ni-MH par exemple) ainsi que l'absence d'effet mémoire. L'autodécharge est relativement faible par rapport à d'autres accumulateurs.

L'ensemble de stockage 18 est un ensemble de forte capacité. Ainsi, l'élément de stockage 18 présente à minima une capacité unitaire supérieure à 4000 Watts.heure (W.h). Des capacités supérieures, de l'ordre de 800 W.h étant indispensables pour fournir la puissance qui peut s'élever en instantanée à 6000 à 8000 Watts (W) en présence d'un climatiseur.

L'élément de stockage 18 est muni d'une unité 22 de gestion. L'unité 22 est parfois appelée système BMS. L'acronyme « BMS » signifie « Batteries Management System ».

Cette unité 22 a plusieurs rôles. Elle permet l'équilibrage de la charge et de la décharge dans les cellules élémentaires au lithium de l'élément de stockage 18. L'unité gère également la sécurité intrinsèque de l'élément de stockage 18.

L'unité de gestion 22 est généralement fournie avec l'élément de stockage 18 par le fournisseur de l'élément de stockage 18.

En pratique, l'unité de gestion 22 contient une puce mémoire qui est programmée par le fabricant avec des informations spécifiques sur l'élément de stockage 18 concernant notamment sa fabrication (nom, date, numéro de série, ...), sa chimie, sa capacité, les tensions maximales et minimales qu'il supporte, les courants maximums, ses limites en température.

Lorsque l'élément de stockage 18 est utilisé, la puce mémoire est aussi propre à enregistrer le nombre de fois que l'élément de stockage 18 a été chargé et déchargé, l'impédance interne de l'élément de stockage 18, le profil de température auquel l'élément de stockage 18 a été soumis, la mise en oeuvre éventuelle des circuits de refroidissement et les instants auxquels les limites préenregistrées ont été franchies.

L'élément de stockage 18 comporte également un moniteur 24. Le rôle du moniteur 24 est d'indiquer un pourcentage de charge de l'élément de stockage 18. Le moniteur 24 dispose également des informations issues de l'unité de gestion 22 comme le courant, la tension ou la température de l'élément de stockage 18.

Le moniteur 24 est soit intégré, soit externe à l'élément de stockage 18.

Dans la variante où le moniteur 24 est intégré, il est, selon un mode de réalisation particulier, confondu avec l'unité de gestion 22.

Dans le cas de la figure 1, le moniteur 24 est externe à l'élément de stockage 18 et sa relation avec l'élément de stockage 18 est symbolisée par la double flèche 26. Le moniteur 24 a ainsi accès à la mesure de l'énergie entrant et sortant de l'élément de stockage 18, aux tensions des différents éléments composant l'élément de stockage 18 et au coefficient de Peukert. Le coefficient de Peukert est représentatif de l'usage de l'élément de stockage 18. Plus précisément, le coefficient Peukert décrit le phénomène de baisse de la capacité d'un élément de stockage 18 lorsqu'il est déchargé plus vite qu'à son intensité nominale sur 20 heures (cas le plus fréquent). Ainsi, plus le coefficient de Peukert est élevé, plus la capacité de l'élément de stockage 18 diminue avec l'augmentation de l'intensité de charge. De ce fait, un élément de stockage 18 idéal aurait un coefficient de Peukert de 1,00 et serait insensible au niveau d'intensité de décharge. La plupart des batteries ont une valeur comprise entre 1,1 et 1,5. Les batteries lithium-ion ont l'avantage de présenter un coefficient de Peukert bas, autour de 1,05.

Par corrélation des différentes informations précédentes, à savoir l'énergie entrant et sortant, les tensions des batteries et le coefficient de Peukert, le moniteur 24 est capable d'obtenir la charge de l'élément de stockage 18.

De préférence, chacun des éléments électriques, présentés jusqu'à présent et qui seront présentés ensuite également, respecte les normes usuelles dans le domaine de la distribution d'énergie électrique de type militaire. On peut citer à titre d'exemple la norme MIL-STD1275B qui s'intitule « Characteristics of 28 Volt dc electrical systems in military vehicles » et la norme NFC15-100 de protection des travailleurs.

Le véhicule 10 comporte également une pluralité d'organes 28 susceptibles d'être alimentés électriquement par l'alternateur 16 et l'élément de stockage 18. A titre d'exemple, dans le cas de la figure 1, l'organe 30 est un climatiseur En effet, la climatisation est impérative pour certains composants, notamment dans le cas où le véhicule 10 est un véhicule avant blindé. La climatisation sert également à améliorer le confort du militaire dans le cas où les conditions extérieures sont extrêmes.

Le climatiseur 30 sur ce type de véhicule 10 est selon un mode de réalisation économique basé sur un compresseur axé sur l'arbre principal du moteur thermique 14. Selon ce mode de réalisation économique, le climatiseur 30 comporte, également, des ventilateurs électriques pour l'évaporateur et le condenseur.

En variante, selon un mode de réalisation plus évolué, le climatiseur 30 est un système de climatisation entièrement électrique et dans ce cas, le compresseur est entraîné par le groupe électrogène 12.

Dans tous les modes de réalisation, ces climatiseurs 30 ont une forte consommation en énergie et sont difficiles à faire fonctionner sur un élément de stockage 18.

Parmi les organes 28, on trouve également un ensemble d'équipements 32 comprenant notamment le tableau de bord, les phares, les clignotants. Ces équipements 32 ont en commun d'être propres au véhicule 10.

En général, ces équipements 32 fonctionnent sur du 24 V DC (DC pour « direct current ») ou du 230 V AC (AC pour « alternative current »). De ce fait, il est usuel que le véhicule 10 comporte un bloc d'alimentation pour la charge utile capable de délivrer les tensions de services de 230 V AC et de 24 V DC. Ce bloc d'alimentation n'est pas représenté sur la figure 1.

Un autre organe 28 représenté sur la figure 1 est un système embarqué C4I 34. Comme expliqué ci-dessus, chacun de ses organes 30, 32, 34 est susceptible d'être alimenté soit par l'alternateur 16 soit par l'élément de stockage 18. Ceci est représenté schématiquement par les liens 36.

Le véhicule 10 comporte également une interface 38 homme/machine (aussi désignée sous l'acronyme IHM). Cette interface 38 permet à un opérateur, généralement un militaire, d'introduire des données et d'avoir accès à des données affichées.

Parmi les données introduites, il y a notamment des instructions de gestion en mode manuel ou automatique de l'électricité produite et reçue dans le véhicule 10. De ce fait, à tout moment, le mode manuel peut ainsi être forcé par l'opérateur.

L'opérateur peut aussi introduire des « profils de mission ». On entend par « profil de mission » la priorité donnée au fonctionnement de certains organes 28 au détriment d'autres organes 28 en fonction d'impératifs militaires liés à la nature de la mission du véhicule 10. A titre d'exemple, pour une mission de surveillance, l'accent est mis sur la discrétion. De ce fait, il est impératif d'arrêter tous les organes 28 qui pourraient entraîner une détection, même au détriment du confort de l'opérateur.

En variante, en plus de la nature de la mission, l'opérateur introduit d'autres données concernant la mission, comme sa durée pour constituer le « profil de mission ».

Les données auxquelles l'interface 38 donnent accès à l'opérateur sont par exemple le nombre de cycles réalisés par l'élément de stockage 18, la capacité d'énergie produite par le groupe 12 et stockée par l'élément de stockage 18, à savoir le groupe électrogène 12 et l'élément de stockage 18 pour mener à bien la mission du véhicule 10 ainsi que le temps restant avant le démarrage du moteur thermique 14.

Le véhicule 10 comprend aussi un contrôleur 40. Le contrôleur 40 est, aussi, parfois désigné sous l'acronyme anglais EMS où l'acronyme EMS signifie Energy Managment System soit « Système de gestion de l'énergie ». Typiquement, le contrôleur 40 est un calculateur de type automate programmable.

Le contrôleur 40 joue plusieurs rôles, à savoir collecter les informations issues de différents éléments du véhicule 10 et gérer ces différents éléments.

Concernant le premier rôle de collecte des informations, le contrôleur 40 reçoit des informations issues du moniteur 24, du groupe électrogène 12, des organes 28 et de l'interface 38.

L'échange d'information se fait via un bus 42 de communication qui permet de faire dialoguer le groupe électrogène 12, les organes 28, l'élément de stockage 18. Notamment, par le bus 42, transitent des informations et des ordres.

A titre d'exemple, le bus 42 est un bus CAN (acronyme anglais de « Controller Area Network »). C'est un bus de système série actuellement utilisé dans la plupart des industries. Ce bus est basé sur des protocoles standardisés utilisant le multiplexage des informations sur deux conducteurs reliés à tous les émetteurs et récepteurs. Un tel bus 42 permet d'éviter la multiplication des câbles dans des environnements encombrés.

Seule l'interface 38 dialogue avec le contrôleur 40 via un lien Ethernet standard. Ethernet est un protocole de réseau local à commutation de paquet.

Plus précisément, le contrôleur 40 collecte de la part du moniteur 24 des informations concernant le taux de charge de l'élément de stockage 18, le temps d'utilisation restant en instantané, la tension de l'élément de stockage 18, le courant qui y entre et qui en sort, l'énergie consommée en ampère heure et le nombre de cycles complets réalisés par l'élément de stockage 18.

De la part du groupe électrogène 12, le contrôleur 40 reçoit des informations sur le courant et la tension du groupe électrogène 12.

A titre d'exemple, l'organe 28 est le climatiseur 30. Dans ce cas, le contrôleur 40 collecte des informations de la part du climatiseur 30 qui sont relatives au courant à appliquer à ce climatiseur 30 pour qu'il puisse fonctionner.

Le contrôleur 40 reçoit aussi des informations de la part de l'interface 38. Comme expliqué plus haut, le contrôleur 40 reçoit notamment des instructions relatives à une gestion en mode manuel ou automatique ou des informations relatives au profil de mission issu d'un opérateur. Les profils de mission permettent de configurer les règles de priorité du contrôleur 40.

Le contrôleur 40 a aussi un rôle de gestion des différents éléments du véhicule 10.

Là encore, les ordres se font via un échange entre l'élément concerné et le contrôleur 40. Ces échanges se font à l'aide du bus 42.

Plus précisément, les ordres prennent la forme d'un contrôle en courant et en tension pour le groupe électrogène 12 (émission de consignes en courant ou en tension vers l'alternateur 16) et l'élément de stockage 18.

Ainsi, grâce aux informations collectées par le moniteur 24, la recharge de l'élément de stockage 18 est pilotée finement en fonction d'au moins une caractéristique de l'élément de stockage 18. Cette caractéristique est, à titre d'illustration, des phases de charge préconisées par le fabricant.

Par exemple, il est possible de générer des courants forts pour une recharge rapide mais non exhaustive de l'élément de stockage 18, suivie d'une charge de finition à faible courant lors de la phase ultime d'équilibrage des cellules de l'élément de stockage 18.

En variante, la caractéristique de l'élément de stockage est la température de l'élément de stockage 18.

Dans ce cas, la mesure instantanée de la température remontée par le moniteur 24 permet d'arrêter la charge de l'élément de stockage 18 lorsque la température de l'élément de stockage 18 dépasse la limite haute préconisée par le fabricant en ne générant que le courant nécessaire aux organes 28.

Ainsi, le contrôleur 40 est dédié à la gestion de l'énergie embarquée dans le véhicule 10.

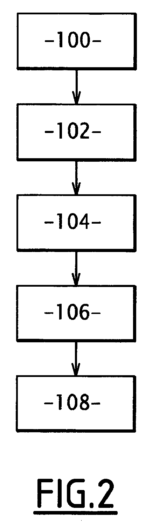

Pour cette gestion, le contrôleur 40 est adapté à mettre en oeuvre un procédé de gestion de l'énergie embarquée dans le véhicule 10, ce procédé de gestion étant illustré par l'ordinogramme de la figure 2.

Ce procédé comprend une étape 100 d'acquisition d'un profil de mission. Durant cette étape 100 d'acquisition, l'opérateur rentre dans l'interface 38 des données qui sont transmises au contrôleur 40.

Le procédé comporte, en outre, une étape 102 d'acquisition de la mesure du nombre de cycles effectués par l'élément de stockage 18. Cette acquisition se fait par le moniteur 24 qui transmet ensuite l'information au contrôleur 40 via le bus 42.

Le procédé comprend, également, une étape 104 de détermination du besoin en alimentation électrique du véhicule 10. Ce besoin est notamment déterminé en fonction du profil de mission entré à l'étape 100 d'acquisition d'un profil de mission et du ou des organes 28 en fonctionnement.

A titre d'exemple, en prenant comme hypothèse que le véhicule 10 est doté d'un climatiseur 30 indépendant c'est-à-dire non couplé mécaniquement au moteur 14, les principaux organes électriques à alimenter sont le compresseur, le ventilateur du condenseur et le ventilateur de l'évaporateur du climatiseur 30.

Dans ce cas, la puissance frigorifique du climatiseur 30 est liée au besoin de diminution de la température qui se déduit de la charge utile électrique, du nombre d'opérateurs dans la station, du véhicule 10 (son volume, sa géométrie, son isolation, sa ventilation) et de la zone climatique dans lequel le véhicule opère.

Selon les cas, le besoin en puissance électrique associé varie alors entre 6000 W et 8000 W.

Le procédé comporte aussi une étape 106 de mesure de l'état de charge de l'élément de stockage 18. Selon l'invention, cette mesure est effectuée par le moniteur 24.

Le procédé de gestion comprend, en outre, une étape de gestion 108 de l'énergie embarqué dans le véhicule 10. Cette gestion est mise en oeuvre par le contrôleur 40.

L'étape de gestion 108 comprend un arrêt du fonctionnement du moteur 14 lorsque l'état de charge mesuré à l'étape 106 est suffisant pour que chaque organe 28 soit alimenté uniquement par l'élément de stockage 18 pendant une durée supérieure à une durée prédéterminée.

On a effet besoin de faire fonctionner le moteur thermique 14 pendant un temps suffisant pour qu'il atteigne des températures nominales de fonctionnement et d'autre part de le stopper suffisamment longtemps pour obtenir une économie de carburant et garantir la discrétion du véhicule 10.

La règle de fonctionnement du moteur thermique 14 peut aussi prendre en compte le nombre de cycles réalisés par l'élément de stockage 18, nombre de cycles qui est acquis à l'étape 102.

L'étape de gestion 108 comporte, aussi, un arrêt du fonctionnement d'au moins un organe 28 en fonction du profil de mission acquis à l'étape 100 et de l'état de charge mesuré à l'étape 108. En effet, comme expliqué plus haut, c'est la criticité de l'organe 28 vis-à-vis de l'impératif de la mission en cours qui est pris en compte.

L'étape de gestion 108 prend, selon un mode de réalisation différent, la forme d'une étape de recharge de l'élément de stockage 18 par l'alternateur 16 lorsque le besoin en alimentation électrique du véhicule 10 déterminé à l'étape 104 de détermination est inférieur au total des besoins en alimentation électrique du véhicule 10 avec l'ensemble des organes 28 en fonctionnement diminué d'un seuil prédéterminé P.

Grâce à l'emploi d'un contrôleur 40, l'alternateur 16 et donc le moteur thermique 14 peuvent être volontairement sous-dimensionnés pour que la recharge de l'élément de stockage 18 ne s'effectue que lorsque l'élément qui consomme le plus d'énergie parmi les différents organes 28 (le plus souvent le compresseur du climatiseur 30) s'arrête.

Ainsi, dans ce cas, à titre d'exemple, le seuil prédéterminé P est égal au besoin en alimentation de l'organe 28 du véhicule 10 consommant le plus, à savoir le compresseur du climatiseur 30.

Lorsqu'un profil de mission correspondant à un « mode silencieux » est pris en compte à l'étape de gestion 108, il en résulte une meilleure discrétion du véhicule 10 dans sa mission. En effet, il est envisageable que la phase de recharge de l'élément de stockage 18 ne se fasse que pendant le roulage destiné à la prise de position du véhicule. Arrivé à son poste, le véhicule 10 passe alors en mode dit « stationnaire ». Dans ce mode « stationnaire », les éléments du groupe électrogène 12 sont arrêtés d'où il résulte une discrétion sonore, thermique et infrarouge. L'émission de fumée et de polluants est aussi évitée.

De façon connexe, un confort est également obtenu pour l'opérateur puisque celui-ci ne serait plus soumis au bruit incessant du moteur 14.

Le procédé proposé permet donc de travailler un maximum de temps sur l'élément de stockage 18 en minimisant l'emploi du moteur 14.

L'emploi d'élément de stockage 18 à haute capacité permet d'obtenir l'autonomie et la puissance désirée pour, faire fonctionner les organes 28 pendant des durées conséquentes. Le contrôleur 40 est peu onéreux et robuste. Le contrôleur 40 permet l'emploi et le pilotage des éléments de stockage 18 sur un mode charge et décharge. Ceci est très différent des technologies sur les batteries à base de plomb qui supportent mal le travail en mode cyclage.

Dans le véhicule 10 proposé, la production d'énergie électrique est adaptée à la consommation instantanée, au juste besoin et non à la consommation maximale comme c'était le cas précédemment. En outre, il devient possible d'asservir le fonctionnement du moteur 14 et donc du groupe électrogène 12 sur le niveau de capacité de l'élément de stockage 18. Il en résulte une diminution de la consommation d'énergie fossile (économie de carburant). De ce fait, le véhicule 10 proposé a un impact écologique réduit.

Le procédé proposé permet en outre de diminuer la sollicitation du moteur 14 car lorsque ce dernier est utilisé, il l'est à bon escient. En outre, le ballastage pour avoir une charge correcte n'est plus nécessaire.

Il en résulte que les entrètiens et la maintenance du moteur 14 se retrouvent espacés dans le temps et la durée de vie du moteur 14 est augmentée ce qui compense le coût lié à l'emploi de batterie haute capacité.

## Revendications

1. Procédé de gestion de l'énergie électrique embarquée dans un véhicule (10) militaire, le véhicule (10) militaire comportant :
- un moteur (14) thermique,
- un alternateur (16) relié au moteur (14),
- un élément (18) de stockage d'énergie électrique susceptible d'être alimenté électriquement par l'alternateur (16),
- au moins un organe (28) susceptible d'être alimenté électriquement par l'alternateur (16) et l'élément de stockage (18),
l'élément de stockage (18) d'énergie électrique étant une pluralité d'accumulateurs lithium, et le procédé comprenant les étapes de :
- détermination du besoin en alimentation électrique du véhicule (10) en fonction du ou des organes (28) en fonctionnement,
- mesure de l'état de charge de l'élément de stockage (18),
- arrêt du fonctionnement du moteur (14) thermique lorsque l'état de charge mesuré est suffisant pour que le ou chaque organe (28) soit alimenté uniquement par l'élément de stockage (18) pendant une durée supérieure à une durée prédéterminée,
- le procédé comportant, en outre, une étape de :
- acquisition d'un profil de mission, un profil de mission étant la priorité donnée au fonctionnement de certains organes (28) au détriment d'autres organes (28) en fonction d'impératifs militaires liés à la nature de la mission du véhicule (10),
et l'étape de détermination du besoin en alimentation électrique du véhicule (10) étant également fonction du profil de mission.

2. Procédé selon la revendication 1, dans lequel le procédé comporte, en outre, une étape de :
- arrêt du fonctionnement d'au moins un organe (28) en fonction du profil de mission acquis et de l'état de charge mesuré.

3. Procédé selon la revendication 1 ou 2, dans lequel l'élément de stockage (18) d'énergie électrique est muni d'un moniteur (24) adapté à mesurer l'énergie entrant et sortant de l'élément de stockage (18) d'énergie électrique et dans lequel l'étape de mesure est effectuée par le moniteur (24).

4. Procédé selon la revendication 3, dans lequel le moniteur (24) est adapté à mesurer le nombre de cycles réalisés par l'élément de stockage (18) et dans lequel l'arrêt du fonctionnement du moteur thermique (14) prend en compte le nombre de cycles réalisés par l'élément de stockage (18).

5. Procédé selon l'une quelconque des revendications 1 à 4, dans lequel le procédé comporte une étape de recharge de l'élément de stockage (18) d'énergie électrique par l'alternateur (16) lorsque le besoin en alimentation électrique déterminé est inférieur au total des besoins en alimentation électrique du véhicule (10) avec l'ensemble des organes (28) en fonctionnement diminué d'un seuil prédéterminé (P).

6. Procédé selon la revendication 5, dans lequel, à l'étape de recharge, le courant appliqué à l'élément de stockage (18) d'énergie électrique varie temporellement en fonction d'au moins une caractéristique de l'élément de stockage (18) d'énergie électrique.

7. Procédé selon la revendication 6, dans lequel la caractéristique de stockage est la température maximale tolérée par l'élément de stockage (18) d'énergie électrique.

8. Procédé selon la revendication 6 ou 7, dans lequel le courant est appliqué à l'élément de stockage (18) d'énergie électrique pendant une première période de temps et une deuxième période de temps successive à la première période de temps, l'intensité du courant appliqué pendant la première période de temps étant supérieur à l'intensité du courant appliqué pendant la deuxième période de temps.

9. Procédé selon l'une quelconque des revendications 1 à 8, dans lequel le véhicule (10) comporte, en outre, une interface (38) homme/machine permettant à l'opérateur d'introduire des données, les données comprenant des instructions de gestion en mode manuel ou automatique et dans lequel le procédé comprend une étape d'acquisition des instructions de gestion introduite par l'opérateur.

10. Procédé selon la revendication 9, dans lequel l'interface homme/machine (38) permet d'afficher des données, des données comprenant le nombre de cycles réalisés par l'élément de stockage (18) et dans lequel le procédé comporte une étape d'affichage de données sur l'interface homme/machine (38).

11. Procédé selon l'une quelconque des revendications 1 à 10, dans lequel l'élément de stockage (18) est un ensemble de batteries lithium/ion.

12. Véhicule (10) militaire comportant :
- un moteur (14) thermique,
- un alternateur (16) relié au moteur (14),
- un élément de stockage (18) d'énergie électrique susceptible d'être alimenté électriquement par l'alternateur (16),
- au moins un organe (28) susceptible d'être alimenté électriquement par l'alternateur (16), et l'élément de stockage (18),
- un contrôleur (40) adapté à mettre en oeuvre le procédé de gestion selon l'une quelconque des revendications 1 à 11.

## Patentansprüche

1. Verfahren zum Verwalten elektrischer Energie, die in einem Militärfahrzeug (10) geladen ist, wobei das Militärfahrzeug (10) umfasst:
- eine Wärmekraftmaschine (14),
- einen Wechselstromgenerator (16), der an den Motor (14) angeschlossen ist,
- ein Elektroenergiespeicherelement (18), das durch den Wechselstromgenerator (16) elektrisch versorgt werden kann,
- mindestens eine Einrichtung (28), die durch den Wechselstromgenerator (16) und das Speicherelement (18) elektrisch versorgt werden kann,
wobei es sich bei dem Elektroenergiespeicherelement (18) um mehrere Lithium-Akkus handelt und das Verfahren die folgenden Schritte umfasst:
- Bestimmen des Bedarfs an elektrischer Versorgung des Fahrzeugs (10) in Abhängigkeit von der oder den Einrichtung/en (28) im Betrieb,
- Messen des Ladezustands des Speicherelements (18),
- Anhalten des Betriebs der Wärmekraftmaschine (14), wenn der Ladezustand ausreicht, damit die oder jede Einrichtung (28) während einer Dauer, die länger ist als eine vorbestimmte Dauer, einzig mittels des Speicherelements (18) versorgt wird,
- wobei das Verfahren darüber hinaus einen Schritt umfasst zur:
- Erfassung eines Missionsprofils, wobei ein Missionsprofil die Priorität aufweist, die dem Betrieb bestimmter Einrichtungen (28) zum Nachteil anderer Einrichtungen (28) in Abhängigkeit von militärischen Erfordernissen eingeräumt wird, die mit der Natur der Mission des Fahrzeugs (10) verbunden sind,
und der Schritt des Bestimmens des Bedarfs an elektrischer Versorgung des Fahrzeugs (10) ebenfalls vom Missionsprofil abhängt.

2. Verfahren nach Anspruch 1, wobei das Verfahren darüber hinaus einen Schritt umfasst zum:
- Anhalten des Betriebs mindestens einer Einrichtung (28) in Abhängigkeit vom erfassten Missionsprofil und gemessenen Ladezustand.

3. Verfahren nach Anspruch 1 oder 2, wobei das Elektroenergiespeicherelement (18) mit einer Überwachungseinrichtung (24) versehen ist, die dazu angepasst ist, die in das Elektroenergiespeicherelement (18) eintretende und aus dieser austretende Energie zu messen, und wobei der Messschritt durch die Überwachungseinrichtung (24) erfolgt.

4. Verfahren nach Anspruch 3, wobei die Überwachungseinrichtung (24) dazu angepasst ist, die Anzahl von Zyklen zu messen, die durch das Speicherelement (18) bewerkstelligt werden, und wobei das Anhalten des Betriebs der Wärmekraftmaschine (14) die Anzahl von Zyklen berücksichtigt, die durch das Speicherelement (18) bewerkstelligt werden.

5. Verfahren nach einem der Ansprüche 1 bis 4, wobei das Verfahren einen Schritt zum Wiederaufladen des Elektroenergiespeicherelements (18) durch den Wechselstromgenerator (16) umfasst, wenn der bestimmte Bedarf an elektrischer Versorgung unter der Gesamtsumme des Bedarfs an elektrischer Energie des Fahrzeugs (10), wobei sich die Gesamtheit der Einrichtungen (28) in Betrieb befindet, abzüglich eines vorbestimmten Schwellenwerts (P) liegt.

6. Verfahren nach Anspruch 5, wobei im Wiederaufladeschritt der an das Elektroenergiespeicherelement (18) angelegte Strom zeitlich in Abhängigkeit von mindestens einer Kenneigenschaft des Elektroenergiespeicherelements (18) variiert.

7. Verfahren nach Anspruch 6, wobei die Speicherkenneigenschaft die maximale Temperatur ist, die vom Elektroenergiespeicherelement (18) toleriert wird.

8. Verfahren nach Anspruch 6 oder 7, wobei der Strom an das Elektroenergiespeicherelement (18) während eines ersten Zeitraums und eines an den ersten Zeitraum anschließenden zweiten Zeitraums angelegt wird, wobei die Stärke des während des ersten Zeitraums angelegten Stroms höher ist als die Stärke des während de zweiten Zeitraums angelegten Stroms.

9. Verfahren nach einem der Ansprüche 1 bis 8, wobei das Fahrzeug (10) darüber hinaus eine Mensch/Maschine-Schnittstelle (38) umfasst, die es dem Bediener ermöglicht, Daten einzugeben, wobei die Daten Instruktionen zur Verwaltung im manuellen oder automatischen Modus umfassen, und wobei das Verfahren einen Schritt zum Erfassen der durch den Bediener eingegebenen Verwaltungs-Instruktionen umfasst.

10. Verfahren nach Anspruch 9, wobei es die Mensch/Maschine-Schnittstelle (38) ermöglicht, Daten anzuzeigen, wobei Daten die Anzahl von durch das Speicherelement (18) bewerkstelligten Zyklen umfassen, und wobei das Verfahren einen Schritt zum Anzeigen von Daten auf der Mensch/Maschine-Schnittstelle (38) umfasst.

11. Verfahren nach einem der Ansprüche 1 bis 10, wobei das Speicherelement (18) eine Einheit aus Lithiumionen-Batterien ist.

12. Militärfahrzeug (10), Folgendes umfassend:
- eine Wärmekraftmaschine (14),
- einen Wechselstromgenerator (16), der an den Motor (14) angeschlossen ist,
- ein Elektroenergiespeicherelement (18), das durch den Wechselstromgenerator (16) elektrisch versorgt werden kann,
- mindestens eine Einrichtung (28), die durch den Wechselstromgenerator (16) und das Speicherelement (18) elektrisch versorgt werden kann,
- eine Steuereinheit (40), die dazu angepasst ist, das Verwaltungs-Verfahren nach einem der Ansprüche 1 bis 11 durchzuführen.

## Claims

1. A method for managing electricity onboard a military vehicle (10), the military vehicle (10) including:
- a heat engine (14),
- an alternator (16) connected to the engine (14),
- an electricity storage element (18) able to be supplied with electricity by the alternator (16),
- at least one member (28) able to be supplied with electricity by the alternator (16) and the storage element (18),
the electricity storage element (18) being a plurality of lithium batteries, and the method comprising the following steps:
- determining the electricity need of the vehicle (10) based on the operating member(s) (28),
- measuring the charge state of the storage element (18),
- stopping the operation of the heat engine (14) when the measured charge state is sufficient for the or each member (28) to be powered only by the storage element (18) for a duration longer than a predetermined duration,
- the method further comprising the following steps:
- acquiring a mission profile, a mission profile being the priority given to the operation of certain members (28) to the detriment of other members (28) based on military imperatives related to the nature of the mission of the vehicle (10),
and the step for determining the electricity need of the vehicle (10) also depending on the mission profile.

2. The method according to claim 1, wherein the method further includes the following steps:
- stopping the operation of at least one member (28) based on the acquired mission profile and the measured charge state.

3. The method according to claim 1 or 2, wherein the electricity storage element (18) is provided with a monitor (24) suitable for measuring the energy entering and leaving the electricity storage element (18) and wherein the measuring step is performed by the monitor (24).

4. The method according to claim 3, wherein the monitor (24) is suitable for measuring the number of cycles performed by the storage element (18) and wherein the stopping of the operation of the heat engine (14) takes into account the number of cycles done by the storage element (18).

5. The method according to any one of claims 1 to 4, wherein the method includes a step for recharging the electricity storage element (18) using the alternator (16) when the determined electricity need is below the total electricity needs of the vehicle (10) with the set of members (28) operating decreased by a predetermined threshold (P).

6. The method according to claim 5, wherein, in the recharging step, the current applied to the electricity storage element (18) varies over time based on at least one characteristic of the electricity storage element (18).

7. The method according to claim 6, wherein the storage characteristic is the maximum temperature tolerated by the electricity storage element (18).

8. The method according to claim 6 or 7, wherein the current is applied to the electricity storage element (18) during a first time period and a second time period following the first time period, the intensity of the current applied during the first time period being greater than the intensity of the current applied during the second time period.

9. The method according to any one of claims 1 to 8, wherein the vehicle (10) further includes a man/machine interface (38) allowing the operator to introduce data, the data comprising management instructions in manual or automatic mode and wherein the method comprises a step for acquiring management instructions introduced by the operator.

10. The method according to claim 9, wherein the man/machine interface (38) makes it possible to display data, data comprising the number of cycles done by the storage element (18) and wherein the method includes a step for displaying data on the man/machine interface (38).

11. The method according to any one of claims 1 to 10, wherein the storage element (18) is a set of lithium/ion batteries.

12. A military vehicle (10) including:
- a heat engine (14),
- an alternator (16) connected to the engine (14),
- an electricity storage element (18) able to be supplied with electricity by the alternator (16),
- at least one member (28) able to be supplied with electricity by the alternator (16), and the storage element (18),
- a controller (40) suitable for carrying out the management method according to any one of steps 1 to 11.
